# EUROPÄISCHE PATENTSCHRIFT

(11) **EP 3 657 020 B1**
(45) Veröffentlichungstag und Bekanntmachung des Hinweises auf die Patenterteilung: **30.03.2022**
(21) Anmeldenummer: 19210876.9
(22) Anmeldetag: 22.11.2019
(51) Int. Cl.: F04D 9/04, F16K 24/04

(54) **EVAKUIERUNGSVORRICHTUNG FÜR EINE SAUGLEITUNG**
EVACUATION DEVICE FOR A SUCTION PIPE
DISPOSITIF D'ÉVACUATION POUR UNE CONDUITE D'ASPIRATION

(30) Priorität: 26.11.2018 DE 102018220226
(43) Veröffentlichungstag der Anmeldung: 27.05.2020
(73) Patentinhaber: Röhren- und Pumpenwerk Bauer Ges.mbH, 8570 Voitsberg (AT)
(72) Erfinder: ROISS, Otto, 8010 Graz (AT)
(74) Vertreter: Hoefer & Partner Patentanwälte mbB

(56) Entgegenhaltungen:
- US-A- 2 144 613
- US-A- 4 251 240
- US-A1- 2006 086 388

## Beschreibung

Die Erfindung betrifft eine Evakuierungsvorrichtung für eine Saugleitung sowie eine Saugvorrichtung umfassend die Evakuierungsvorrichtung. Die Evakuierungsvorrichtung beziehungsweise die Saugvorrichtung sind insbesondere zum Fördern von Gülle, Klärschlamm oder Abwasser ausgebildet; können jedoch auch für andere Flüssigkeiten verwendet werden.

Beim Pumpen von Flüssigkeiten werden oftmals Pumpen eingesetzt, die die Saugleitung nicht selbstständig evakuieren können. Zu diesem Zweck werden Evakuierungsvorrichtungen eingesetzt, die es ermöglichen, die Saugleitung zu evakuieren, sodass der Flüssigkeitspegel bis zur Pumpe ansteigt. Solche Evakuierungsvorrichtungen werden teilweise auch als Abscheider bezeichnet, da sie die Luft aus der Saugleitung vor Beginn des Pumpvorganges abscheiden. Problematisch bei vorbekannten Evakuierungsvorrichtungen ist, dass die zu fördernde Flüssigkeit in Kontakt mit Dichtungen der Evakuierungsvorrichtung kommen kann, wodurch eine Beeinträchtigung der Dichtung einhergehen kann.

US 2 144 613 A zeigt eine Evakuierungsvorrichtung gemäß dem Oberbegriff des Anspruchs 1.

Es ist eine Aufgabe vorliegender Erfindung, eine Evakuierungsvorrichtung anzugeben, die bei einfachem Aufbau und wartungsarmen Betrieb die Evakuierung einer Saugleitung ermöglicht.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch eine Evakuierungsvorrichtung für eine Saugleitung. Die Saugleitung ist zum Ansaugen einer Flüssigkeit ausgebildet. Bei der Flüssigkeit handelt es sich insbesondere um Trüben, wie beispielsweise Gülle, Klärschlamm oder sonstiges Abwasser. Des Weiteren kann es sich bei der Trübe auch um eine sonstige, mit Feststoff versetzte Flüssigkeit handeln, beispielsweise eine Pulpe (Wasser mit Zellstoff bei der Papierherstellung). Des Weiteren ist die hier vorgestellte Evakuierungsvorrichtung vorteilhaft anwendbar bei aggressiven Flüssigkeiten, bei denen ein Kontakt mit den Dichtungen der Evakuierungsvorrichtung zu vermeiden ist.

Die Evakuierungsvorrichtung umfasst ein Gehäuse. Das Gehäuse bildet eine Kammer. Die Kammer ist zum Ansetzen an die Saugleitung ausgebildet. Insbesondere ist die Kammer an ihrer Unterseite offen und kann mit dieser offenen Seite an die Saugleitung angesetzt werden. Die Kammer ist somit zum fluidleitenden Ansetzen an eine Saugleitung ausgebildet.

Des Weiteren weist das Gehäuse einen Evakuierungsanschluss auf. An diesem Evakuierungsanschluss kann eine Evakuierungsleitung angeschlossen werden. Diese Evakuierungsleitung wiederum führt zu einem Verdichter (auch: Kompressor). Dadurch kann über den Evakuierungsanschluss Luft aus dem Gehäuse abgesaugt werden. Der Evakuierungsanschluss ist in dem Gehäuse über eine Durchgangsöffnung mit der Kammer verbunden. Die Durchgangsöffnung befindet sich somit zwischen der Kammer und dem Evakuierungsanschluss.

Die Evakuierungsvorrichtung umfasst ferner ein erstes Ventil. Das erste Ventil umfasst einen ersten Ventilsitz an der Durchgangsöffnung. Insbesondere ist der erste Ventilsitz an der der Kammer zugewandten Seite der Durchgangsöffnung ausgebildet. Des Weiteren umfasst das erste Ventil ein erstes Verschlussteil. Das erste Verschlussteil befindet sich insbesondere in der Kammer. Das erste Verschlussteil ist zum Verschließen des ersten Ventilsitzes ausgebildet.

Ferner umfasst das erste Ventil einen Schwimmer. Der Schwimmer befindet sich in der Kammer, kann aber auch teilweise in die Saugleitung ragen. Der Schwimmer ist mit dem ersten Verschlussteil derart verbunden, dass der aufschwimmende Schwimmer das erste Ventil schließt.

Die Evakuierungsvorrichtung umfasst ferner ein zweites Ventil. Das zweite Ventil ist als Rückschlagventil ausgebildet. Das zweite Ventil befindet sich zwischen der Durchgangsöffnung und dem Evakuierungsanschluss. Das zweite Ventil ist dabei so ausgebildet, dass es sich bei einer Strömung in Strömungsrichtung von der Kammer in Richtung des Anschlusses öffnet. Wenn die Strömung in dieser Richtung abbricht bzw. der Druckunterschied nicht ausreichend groß ist, schließt sich das als Rückschlagventil ausgebildete zweite Ventil.

Die Evakuierungsvorrichtung ist insbesondere zur vertikalen Anordnung ausgebildet. Dementsprechend kann entlang des Gehäuses eine Vertikalachse definiert werden. Bezüglich dieser Vertikalachse werden Begriffe wie "oben", "unten" oder ähnliches verwendet. Bevorzugt ist vorgesehen, dass sich der Schwimmer beim Aufschwimmen im Wesentlichen parallel zur Vertikalachse bewegt. Des Weiteren ist bevorzugt vorgesehen, dass die Kammer bezüglich der Vertikalachse an ihrer Unterseite offen ist und an dieser Seite mit der Saugleitung fluidverbunden ist. Des Weiteren ist bevorzugt vorgesehen, dass sich der Schwimmer bezüglich der Vertikalachse unterhalb des ersten Ventils befindet. Ferner ist bevorzugt vorgesehen, dass das zweite Ventil bezüglich der Vertikalachse über dem ersten Ventil angeordnet ist.

Vor Beginn des Pumpvorgangs ist die Saugleitung im Regelfall mit Luft gefüllt. Der Schwimmer schwimmt dabei nicht auf, sodass das erste Ventil geöffnet ist. Mit Beginn der Absaugung der Luft über den Evakuierungsanschluss öffnet sich das zweite Ventil, wodurch es zur Evakuierung in der Kammer und der damit verbundenen Saugleitung kommt. Durch diese Evakuierung steigt der Flüssigkeitspegel in der Saugleitung an, wodurch der Schwimmer aufschwimmt. Der aufschwimmende Schwimmer schließt dabei das erste Ventil. Dadurch, dass ein separater Schwimmer vorgesehen ist, muss die Flüssigkeit lediglich bis zum Schwimmer ansteigen, um das erste Ventil zu schließen. Die Flüssigkeit steigt dabei nicht bis zum ersten Verschlussteil und auch nicht bis zum Ventilsitz an, wodurch ein Kontakt des ersten Verschlussteils beziehungsweise des ersten Ventilsitzes mit der Flüssigkeit vermieden wird.

Sobald der Pumpvorgang beginnt, fällt der Druck in der Kammer und das Absaugen der Luft über den Evakuierungsanschluss wird gestoppt. Dabei schließt sich das zweite Ventil.

Das erste Ventil weist bevorzugt ein Dichtmittel auf. Dieses Dichtmittel kann am ersten Verschlussteil oder am ersten Ventilsitz angeordnet sein. Insbesondere soll der Kontakt der Flüssigkeit mit diesem Dichtmittel verhindert werden. Hierzu ist ein möglichst großer Abstand dieses Dichtmittels vom Schwimmer vorgesehen. Dieser Abstand wird als Schwimmerabstand bezeichnet und wird vom untersten Punkt des Dichtmittels bis zur Wasserlinie des Schwimmers gemessen. Die Wasserlinie des Schwimmers bestimmt sich insbesondere durch die Eintauchtiefe des Schwimmers in Wasser. Zur Definition wird hier insbesondere Wasser mit einer Dichte von 997 Kg/m³ verwendet. Der Schwimmerabstand wird parallel zur Vertikalachse gemessen. Vorteilhafterweise beträgt der Schwimmerabstand zumindest 5 cm, insbesondere zumindest 10 cm, vorzugsweise zumindest 15 cm, besonders vorzugsweise zumindest 20 cm.

Es hat sich herausgestellt, dass ein Schwimmerabstand von zumindest 5 cm oder mehr besonders vorzugsweise bei schäumenden Flüssigkeiten (zum Beispiel Gülle, Klärschlamm, Abwasser, Pulpe ...) verwendet werden sollte. Durch den möglichst großen Abstand wird vermieden, dass der in der Kammer aufsteigende Schaum das Dichtmittel kontaktiert.

Des Weiteren ist bevorzugt vorgesehen, dass das erste Verschlussteil als Klappe ausgebildet ist. Die Klappe ist vorzugsweise an einer Seite drehbeweglich mit dem Gehäuse verbunden.

An der anderen Seite der Klappe ist vorzugsweise der Schwimmer befestigt. Im offenen Zustand hängt die Klappe vorzugsweise nach unten; insbesondere durch das Gewicht des Schwimmers und/oder durch das Gewicht eines optionalen Verbindungselementes zwischen Schwimmer und Klappe. Der aufschwimmende Schwimmer hebt somit die Klappe an und schließt dadurch das erste Ventil.

Des Weiteren ist bevorzugt vorgesehen, dass die Klappe einen Hebel und einen Deckel umfasst. Der Hebel ist dabei gehäuseseitig drehbar angeschlagen. Der Deckel ist zum Verschließen des ersten Ventilsitzes ausgebildet. Insbesondere befindet sich das oben beschriebene Dichtmittel am Deckel. Der Deckel ist drehbar am Hebel angeordnet. Durch diese drehbare Verbindung zwischen Deckel und Hebel ist ein flächiger Sitz des Deckels am ersten Ventilsitz gewährleistet.

Des Weiteren ist bevorzugt vorgesehen, dass der Schwimmer am ersten Verschlussteil, insbesondere an der Klappe, hängt. Der Schwimmer ist somit lediglich an dem ersten Verschlussteil und nicht anderweitig befestigt. Der Schwimmer hängt dabei insbesondere entlang der Vertikalachse nach unten.

In bevorzugter Ausführung ist vorgesehen, dass die Evakuierungsvorrichtung ein Verbindungselement umfasst. Das Verbindungselement, beispielsweise ausgestaltet als Stange, ist mit einem Ende am Schwimmer befestigt und ist am anderen Ende drehbar mit dem ersten Verschlussteil, insbesondere der Klappe, verbunden. Insbesondere ist das Verbindungselement drehbar mit dem Hebel der Klappe verbunden.

Insbesondere ist vorgesehen, dass das Verbindungselement in sich steif ist. Vorzugsweise ist auch die Verbindung zwischen Verbindungselement und Schwimmer steif, wodurch sich ein einfacher und wartungsarmer Aufbau ergibt. Wie beschrieben ist die Verbindung zwischen Verbindungselement und erstem Verschlussteil vorzugsweise drehbar ausgebildet.

Der oben beschriebene Schwimmerabstand wird beispielsweise durch eine entsprechend lange Ausgestaltung des Verbindungselementes erreicht. Das Verbindungselement erstreckt sich vorzugsweise im Wesentlichen parallel zur Vertikalachse; wobei eine leicht schräge Anordnung möglich ist.

Das zweite Ventil (Rückschlagventil) umfasst einen zweiten Ventilsitz, der ebenfalls an der Durchgangsöffnung ausgebildet ist. Der zweite Ventilsitz befindet sich insbesondere an der oberen Seite der Durchgangsöffnung. Das zweite Ventil umfasst ferner ein zweites Verschlussteil zum Verschließen des zweiten Ventilsitzes. Das zweite Verschlussteil ist eine Kugel. Die Kugel kann ein Vollkörper oder Hohlkörper sein Besonders bevorzugt ist vorgesehen, dass das zweite Verschlussteil nicht federbelastet ist oder mit sonstigem Mittel in den zweiten Ventilsitz bewegt wird. So ist bevorzugt vorgesehen, dass das zweite Verschlussteil sich lediglich durch die Gewichtskraft in den zweiten Ventilsitz bewegt und somit das zweite Ventil schließt. Hierzu ist insbesondere vorgesehen, dass das zweite Verschlussteil als Kugel ausgebildet ist.

Die Kugel (zweites Verschlussteil) ist vorzugsweise relativ groß ausgebildet, sodass sie einerseits schwer genug zum Schließen des zweiten Ventils ist und andererseits auch bei einer Wartung nicht übersehen wird oder verloren geht. Insbesondere weist die Kugel einen Verschlussteildurchmesser von zumindest 2 cm (beispielsweise bei der Ausbildung aus Metall) oder zumindest 4 cm (beispielsweise bei der Ausbildung aus Kunststoff oder Gummi) auf.

Des Weiteren ist vorgesehen, dass der erste Ventilkörper einen Fortsatz aufweist. Dieser Fortsatz ist so ausgebildet und angeordnet, dass er im geschlossenen Zustand des ersten Ventils in die Durchgangsöffnung ragt und dabei das zweite Verschlussteil aus dem zweiten Ventilsitz drückt. Insbesondere ist der Fortsatz ein Stift der vom ersten Verschlussteil, insbesondere ausgebildet als Klappe, nach oben ragt. Durch den Fortsatz und das Anheben des zweiten Verschlussteils wird sichergestellt, dass nicht beide Ventile gleichzeitig geschlossen sind.

Das Gehäuse umfasst vorzugweise einen Aufsatz. Dieser Aufsatz bildet einen Aufnahmeraum. In diesem Aufnahmeraum befindet sich das zweite Verschlussteil, insbesondere die Kugel. Dementsprechend sitzt der Aufsatz über der Durchgangsöffnung.

Der Evakuierungsanschluss ist vorzugsweise an dem Aufsatz angeordnet.

Der Aufsatz umfasst vorzugsweise einen Aufsatzdeckel, der zerstörungsfrei lösbar ist. Durch Abnehmen des Aufsatzdeckels ist der Aufnahmeraum zugänglich, beispielsweise für Wartungs- oder Reinigungsarbeiten.

Bevorzugt ist vorgesehen, dass das Gehäuse der Evakuierungsvorrichtung eine Basis und einen rohrförmigen Grundkörper umfasst. Der Grundkörper bildet dabei zumindest einen Teil der Kammer. Die Basis verschließt den Grundkörper an seiner Oberseite. Zu Wartungs- oder Reinigungsarbeiten ist die Basis vorzugsweise zerstörungsfrei lösbar mit dem Grundkörper verbunden. Insbesondere sind Basis und Grundkörper miteinander verschraubt oder über einen Schnellverschluss verbunden. Der Schnellverschluss zeichnet sich dadurch aus, dass er werkzeuglos geöffnet und wieder geschlossen werden kann.

In der Basis ist die Durchgangsöffnung ausgebildet und das erste Verschlussteil, insbesondere die Klappe, ist an der Basis befestigt.

Besonders bevorzugt umfasst die Basis eine Platte und einen Einsatz. Die Platte weist ein Loch auf, in dem der Einsatz sitzt. Die Durchgangsöffnung wiederum ist in dem Einsatz ausgebildet. Vorzugsweise sind der Einsatz und die restliche Basis aus unterschiedlichem Material gefertigt. Der Einsatz ist vorzugsweise aus einem nicht-korrosiven Material, insbesondere Edelstahl, gefertigt.

Dadurch, dass das erste Verschlussteil des ersten Ventils an der Basis befestigt ist, hängt auch der Schwimmer über das erste Verschlussteil an der Basis. Bei Lösen der Basis vom Grundkörper kann die gesamte Einheit aus Basis und erstem Ventil samt Schwimmer aus dem Grundkörper entnommen werden.

Besonders bevorzugt ist der oben beschriebene Aufsatz zur Bildung des Aufnahmerahmens ebenfalls an der Basis angeordnet. Beispielsweise ist der Aufsatz mit der Platte fest verbunden, insbesondere verschweißt.

Des Weiteren ist bevorzugt vorgesehen, dass die Evakuierungsvorrichtung einen Ablasshahn umfasst. Dieser Ablasshahn ist vorzugsweise an der Basis angeordnet. Durch Öffnen des Ablasshahns kann Umgebungsluft in die Kammer strömen, um beispielsweise nach Beenden des Pumpvorgangs die Saugleitung zu entleeren.

Wie beschrieben, bildet das Gehäuse der Evakuierungsvorrichtung die Kammer aus. Der rohrförmige Grundkörper des Gehäuses kann dabei auch nur einen Teil dieser Kammer bilden, wobei der weitere Teil der Kammer durch ein weiteres Element gebildet sein kann. Beispielsweise verläuft die Saugleitung durch ein T-Stück. Die obere Abzweigung des T-Stücks kann mit dem rohrförmigen Grundkörper verbunden werden, sodass der Grundkörper zusammen mit der oberen Abzweigung des T-Stücks im Gesamten die Kammer bildet.

Die Erfindung umfasst ferner eine Saugvorrichtung. Diese Saugvorrichtung wird zum Beispiel zum Füllen eines Güllefasses verwendet. Die Saugvorrichtung dient zum Fördern einer Flüssigkeit und umfasst hierzu einen Verdichter, eine Saugleitung und die beschriebene Evakuierungsvorrichtung. Der Verdichter ist dabei an den Evakuierungsanschluss der Evakuierungsvorrichtung angeschlossen. Die Kammer ist fluidleitend mit der Saugleitung verbunden.

Bei Ausbildung der Saugvorrichtung sind vorzugsweise noch weitere Bestandteile vorgesehen, wie beispielsweise die Pumpe zum Fördern der Flüssigkeit über die Saugleitung. Bei der Pumpe handelt sich insbesondere um eine trocken aufgestellte Pumpe.

Allerdings kann die Saugvorrichtung auch Bestandteil anderweitiger Anlagen zum Pumpen einer Flüssigkeit sein.

Weitere Einzelheiten, Vorteile und Merkmale der vorliegenden Erfindung ergeben sich aus nachfolgender Beschreibung von Ausführungsbeispielen anhand der Zeichnung. Es zeigen:
- Figur 1: eine erfindungsgemäße Saugvorrichtung mit erfindungsgemäßer Evakuierungsvorrichtung gemäß einem Ausführungsbeispiel,
- Figur 2: eine Schnittansicht der erfindungsgemäßen Evakuierungsvorrichtung gemäß dem Ausführungsbeispiel,
- Figur 3: eine weitere Schnittansicht der erfindungsgemäßen Evakuierungsvorrichtung gemäß dem Ausführungsbeispiel, und
- Figur 4: ein Detail aus Figur 3.

Im Folgenden wird eine Evakuierungsvorrichtung 2 an einer Saugvorrichtung 1 im Detail beschrieben. Soweit nicht anders ausgeführt, wird stets auf alle Figuren Bezug genommen. Die beschriebene Saugvorrichtung 1 wird beispielsweise zur Förderung von Gülle verwendet.

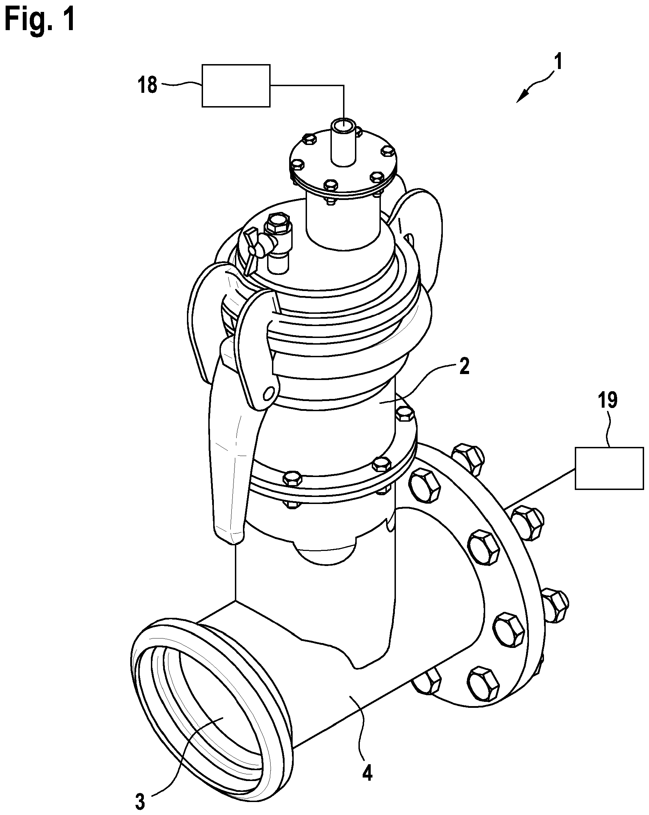

Wie Figur 1 zeigt, umfasst die Saugvorrichtung 1 die Evakuierungsvorrichtung 2, eine Saugleitung 3, einen Verdichter 18 und eine Pumpe 19.

Die Saugleitung 3 läuft hier durch ein T-Stück 4. Die obere Abzweigung des T-Stücks 4 bildet einen Teil der Evakuierungsvorrichtung 2.

An einer Flanschseite der Saugleitung 3 beziehungsweise des T-Stücks 4 ist die Pumpe 19 angeschlossen. An einer Oberseite der Evakuierungsvorrichtung 2 ist der Verdichter 18 zum Absaugen der Luft aus der Saugleitung 3 angeschlossen.

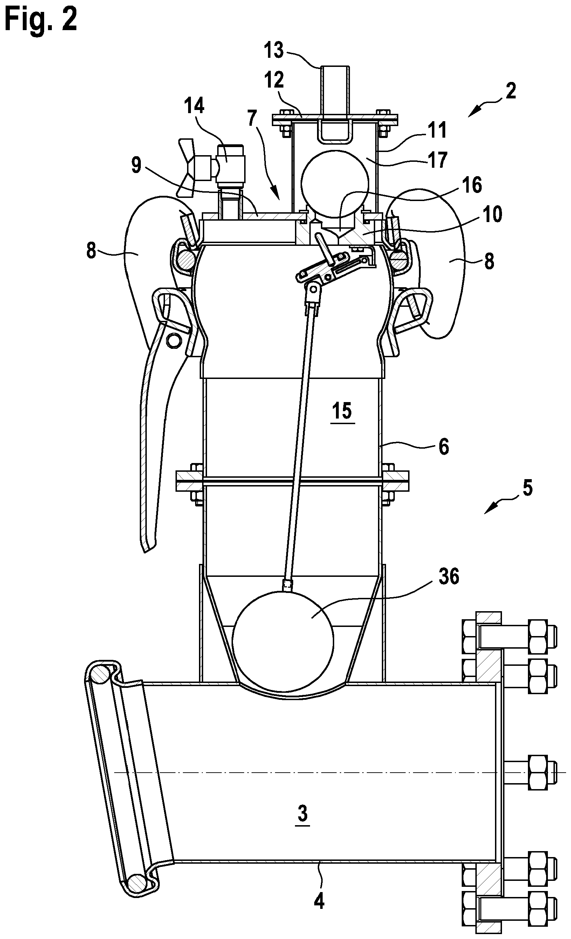

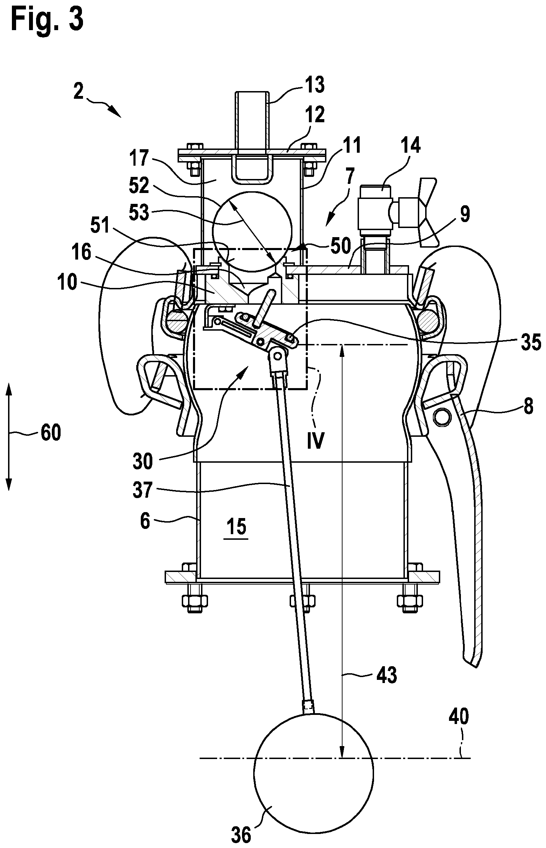

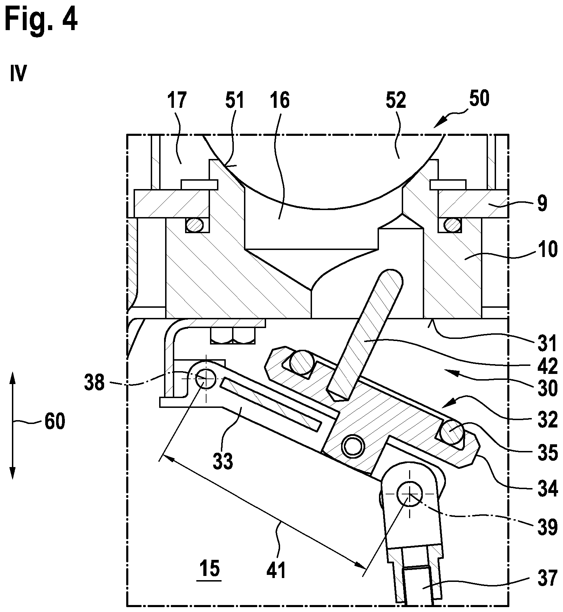

Figuren 2 bis 4 zeigen die Evakuierungsvorrichtung 2 im Detail. Figur 4 zeigt das in Figur 3 gekennzeichnete Detail IV.

Die Evakuierungsvorrichtung 2 umfasst ein Gehäuse 5. Das Gehäuse 5 wiederum umfasst die obere Abzweigung des T-Stücks 4, einen rohrförmigen Grundköper 6 und eine Basis 7. Der rohrförmige Grundkörper 6 ist auf dem T-Stück 4 aufgeflanscht. Die Basis 7 verschließt das obere Ende des rohrförmigen Grundkörpers 6. Die Basis 7 und der Grundkörper 6 sind hierbei mittels eines Schnellverschlusses 8 miteinander verbunden.

Die Basis 7 umfasst eine Platte 9 und einen Einsatz 10. Der Einsatz 10 sitzt abgedichtet in der Platte 9. Der Hohlraum im Grundkörper 6 und in der oberen Abzweigung des T-Stücks 4 bildet eine Kammer 15.

Auf der Basis 7 ist ein Aufsatz 11 angeordnet. Der Aufsatz 11 ist an seiner Oberseite mittels eines Aufsatzdeckels 12 verschlossen. Der Aufsatz 11 bildet dabei einen Aufnahmeraum 17.

In der Basis 7, insbesondere in dem Einsatz 10, ist eine Durchgangsöffnung 16 ausgebildet. Diese Durchgangsöffnung 16 verbindet den oberen Aufnahmeraum 17 mit der darunterliegenden Kammer 15.

Am Aufsatz 11, insbesondere am Aufsatzdeckel 12, befindet sich ein Evakuierungsanschluss 13 zum Anschluss des Verdichters 18.

Des Weiteren befindet sich an der Basis 7, insbesondere an der Platte 9, ein Ablasshahn 14, über den die Kammer 15 mit der Umgebung verbunden werden kann. Zwischen dem Aufnahmeraum 17 und der Kammer 15 ist ein erstes Ventil 30 angeordnet. Insbesondere befindet sich das erste Ventil 30 in der Kammer 15.

Das erste Ventil 30 umfasst einen ersten Ventilsitz 31 an der Durchgangsöffnung 16 und ein erstes Verschlussteil 32 zum Verschließen des ersten Ventilsitzes 31.

Das erste Verschlussteil 32 ist als Klappe ausgebildet und an der Basis 7, insbesondere am Einsatz 10, drehbeweglich angeschlagen.

Am gezeigten Ausführungsbeispiel umfasst das erste Verschlussteil 32 einen Hebel 33 und einen Deckel 34. Der Hebel 33 ist drehbar an der Basis 7 angeschlagen. Der Deckel 34 wiederum ist drehbar am Hebel 33 angeordnet.

An dem Deckel 34 befindet sich ein Dichtmittel 35, hier ausgebildet als Dichtungsring. Dieses Dichtmittel 35 liegt im geschlossenen Zustand des ersten Ventils 30 dichtend am ersten Ventilsitz 32 an.

Des Weiteren umfasst das erste Ventil 30 einen Schwimmer 36. Der Schwimmer 36 hängt am ersten Verschlussteil 32. Der Schwimmer 36 befindet sich dabei in der Kammer 15.

Im gezeigten Ausführungsbeispiel ist der Schwimmer 36 über ein Verbindungselement 37, ausgebildet als Stange, mit dem ersten Verschlussteil 32, insbesondere mit dem Hebel 33, verbunden.

Insbesondere die Detaildarstellung in Figur 4 zeigt eine erste Drehachse 38 zwischen dem ersten Verschlussteil 32 und dem Gehäuse 5. Des Weiteren ist eine zweite Drehachse 39 zwischen dem Verbindungselement 37 und dem ersten Verschlussteil 32 gezeigt. Der Abstand der beiden Drehachsen 38, 39 wird als Hebellänge 41 bezeichnet.

Insbesondere Figur 3 zeigt eine Wasserlinie 40 des Schwimmers 36. Ein Schwimmerabstand 43 wird parallel zu einer Vertikalachse 60 gemessen. Der Schwimmerabstand 43 erstreckt sich von einem untersten Punkt des Dichtmittels 35 in vertikaler Richtung bis zur Wasserlinie 40.

Im gezeigten Ausführungsbeispiel wird dieser Abstand in der geöffneten Stellung des ersten Ventils 30 gemessen.

Wie im allgemeinen Teil beschrieben, ist der Schwimmerabstand 43 mehrere Zentimeter lang, um auch bei einem Aufschäumen der zu fördernden Flüssigkeit einen Kontakt mit dem Dichtmittel 35 zu vermeiden.

Der Schwimmer 36 hängt im Wesentlichen vertikal nach unten. Das erste Verschlussteil 32 ist möglichst kurz ausgebildet, sodass sich die Evakuierungsvorrichtung 2 im Wesentlichen entlang der Vertikalachse 60 erstreckt.

Insbesondere ist vorgesehen, dass die Hebellänge 41 höchstens 50%, vorzugsweise höchstens 30%, des Schwimmerabstands 43 beträgt.

Die Evakuierungsvorrichtung 2 fasst ferner ein zweites Ventil 50, ausgebildet als Rückschlagventil. Das zweite Ventil 50 umfasst einen zweiten Ventilsitz 51 an der Durchgangsöffnung 16. Der zweite Ventilsitz 51 ist dem Aufnahmeraum 17 zugewandt.

In dem Aufnahmeraum 17 befindet sich ein zweites Verschlussteil 52. Das zweite Verschlussteil 52 ist hier als Kugel, insbesondere aus Gummi, mit einem Verschlussteildurchmesser 53 ausgebildet. Das zweite Verschlussteil 52 wird durch keine Feder oder ein sonstiges Mittel in den zweiten Ventilsitz 51 gedrückt, sondern bewegt sich lediglich aufgrund seiner Masse in den zweiten Ventilsitz 51.

Am ersten Verschlussteil 32 ist ein Fortsatz 42 in Form eines Stiftes ausgebildet. Der Fortsatz 42 ragt im geschlossenen Zustand des ersten Ventils 30 in die Durchgangsöffnung 16 und hebt dabei das zweite Verschlussteil 52 aus dem zweiten Ventilsitz 51, wodurch sich das zweite Ventil 50 öffnet.

### Bezugszeichenliste

- 1: Saugvorrichtung
- 2: Evakuierungsvorrichtung
- 3: Saugleitung
- 4: T-Stück

- 5: Gehäuse
- 6: Grundkörper
- 7: Basis
- 8: Schnellverschluss
- 9: Platte
- 10: Einsatz
- 11: Aufsatz
- 12: Aufsatzdeckel
- 13: Evakuierungsanschluss
- 14: Ablasshahn
- 15: Kammer
- 16: Durchgangsöffnung
- 17: Aufnahmeraum
- 18: Verdichter
- 19: Pumpe

- 30: erstes Ventil
- 31: erster Ventilsitz
- 32: erstes Verschlussteil
- 33: Hebel
- 34: Deckel
- 35: Dichtmittel
- 36: Schwimmer
- 37: Verbindungselement
- 38: erste Drehachse
- 39: zweite Drehachse
- 40: Wasserlinie
- 41: Hebellänge
- 42: Fortsatz
- 43: Schwimmerabstand
- 50: zweites Ventil (Rückschlagventil)
- 51: zweiter Ventilsitz
- 52: zweites Verschlussteil
- 53: Verschlussteildurchmesser

- 60: Vertikalachse

## Patentansprüche

1. Evakuierungsvorrichtung (2) für eine Saugleitung (3), umfassend
• ein Gehäuse (5) mit
∘ einer Kammer (15) zum Ansetzen an eine Saugleitung (3),
∘ einem Evakuierungsanschluss (13) für eine Evakuierungsleitung
∘ und einer Durchgangsöffnung (16) zwischen der Kammer (15) und dem Evakuierungsanschluss (13),
• ein erstes Ventil (30) mit
∘ einem ersten Ventilsitz (31) an der Durchgangsöffnung (16),
∘ einem ersten Verschlussteil (32) zum Verschließen des ersten Ventilsitzes (31)
∘ und einem Schwimmer (36) in der Kammer (15), der mit dem ersten Verschlussteil (32) verbunden ist, sodass der aufschwimmende Schwimmer (36) das erste Ventil (30) schließt,
• ein zweites Ventil (50), ausgebildet als Rückschlagventil, zwischen der Durchgangsöffnung (16) und dem Evakuierungsanschluss (13), wobei das zweite Ventil (50) bei einer Strömungsrichtung von der Kammer (15) zum Evakuierungsanschluss (13) öffnet,
• wobei das zweite Ventil (50) einen zweiten Ventilsitz (51) an der Durchgangsöffnung (16) und ein zweites Verschlussteil (52), ausgebildet als Kugel, zum Verschließen des zweiten Ventilsitzes (51) umfasst,
**dadurch gekennzeichnet, dass**
das erste Verschlussteil (32) einen Fortsatz (42) aufweist, der im geschlossenen Zustand des ersten Ventils (30) in die Durchgangsöffnung (16) ragt und dabei das zweite Verschlussteil (52) aus dem zweiten Ventilsitz (51) drückt.

2. Evakuierungsvorrichtung nach Anspruch 1,
• wobei das erste Ventil (30) ein Dichtmittel (35) aufweist,
• wobei die Wasserlinie (40) des Schwimmers (36) entlang der Vertikalachse (60) um einen Schwimmerabstand (43) von dem Dichtmittel (35) beabstandet ist,
• und wobei der Schwimmerabstand (43) zumindest 5 cm, vorzugsweise zumindest 10 cm, weiter vorzugsweise zumindest 15 cm, besonders vorzugsweise zumindest 20 cm, beträgt.

3. Evakuierungsvorrichtung nach einem der vorhergehenden Ansprüche, wobei das erste Verschlussteil (32) als Klappe ausgebildet ist.

4. Evakuierungsvorrichtung nach Anspruch 3,
• wobei die Klappe einen Hebel (33) und einen Deckel (34) umfasst,
• wobei der Hebel (33) gehäuseseitig drehbar angeschlagenen ist,
• und wobei der Deckel (34) zum Verschließen des ersten Ventilsitzes (31) ausgebildet ist und drehbar am Hebel (33) angeordnet ist.

5. Evakuierungsvorrichtung nach einem der vorhergehenden Ansprüche, wobei der Schwimmer (36) am ersten Verschlussteil (32) hängt.

6. Evakuierungsvorrichtung nach einem der vorhergehenden Ansprüche, umfassend ein Verbindungselement (37), das mit einem Ende am Schwimmer (36) befestigt ist und am anderen Ende drehbar mit dem ersten Verschlussteil (32) verbunden ist.

7. Evakuierungsvorrichtung nach einem der vorhergehenden Ansprüche,
• wobei das Gehäuse (5) eine Basis (7) und einen rohrförmigen Grundkörper (6) umfasst,
• wobei der Grundkörper (6) zumindest einen Teil der Kammer (15) bildet und die Basis (7) den Grundkörper (6) an seiner Oberseite verschließt,
• wobei die Basis zu Wartungszwecken zerstörungsfrei lösbar mit dem Grundkörper verbunden ist,
• und wobei in der Basis die Durchgangsöffnung (16) ausgebildet ist und das erste Verschlussteil (32) an der Basis (7) befestigt ist.

8. Saugvorrichtung (1) zum Fördern einer Flüssigkeit, umfassend einen Verdichter (18), eine Saugleitung (3) und eine Evakuierungsvorrichtung (2) nach einem der vorhergehenden Ansprüche, wobei der Verdichter (18) an den Evakuierungsanschluss (13) angeschlossen ist und wobei die Kammer (15) fluidleitend mit der Saugleitung (3) verbunden ist.

## Claims

1. An evacuation device (2) for a suction pipe (3), comprising
- a housing (5) with
a chamber (15) for attaching to a suction pipe (3),
an evacuation connection (13) for an evacuation pipe
and a through opening (16) between the chamber (15) and the evacuation connection (13),
- a first valve (30) with
a first valve seat (31) at the through opening (16),
a first closing member (32) for closing the first valve seat (31), and
and a float (36) in the chamber (15), which is connected to the first closing member (32), so that the floating float (36) closes the first valve (30),
- a second valve (50), formed as a check valve, between the through opening (16) and the evacuation connection (13), wherein the second valve (50) opens in a flow direction from the chamber (15) to the evacuation connection (13),
- wherein the second valve (50) comprises a second valve seat (51) at the through opening (16) and a second closing member (52), formed as a ball, for closing the second valve seat (51), **characterized in that** the first closing member (32) comprises an extension (42), which, in the closed state of the first valve (30), penetrates in the through opening (16) and thereby presses the second closing member (52) out of the second valve seat (51).

2. The evacuation device according to claim 1,
- wherein the first valve (30) comprises a sealing means (35),
- wherein the waterline (40) of the float (36) is spaced from the sealing means (35) along the vertical axis (60) by a float distance (43),
- and wherein the float distance (43) is at least 5 cm, preferably at least 10 cm, further preferably at least 15 cm, particularly preferably at least 20 cm.

3. The evacuation device according to any of the preceding claims, wherein the first closing member (32) is formed as a flap.

4. The evacuation device according to claim 3,
- wherein the flap comprises a lever (33) and a cover (34),
- wherein the lever (33) is rotatably mounted on the housing side,
- and wherein the cover (34) is formed for closing the first valve seat (31) and is rotatably mounted at the lever (33).

5. The evacuation device according to any of the preceding claims, wherein the float (36) hangs at the first closing member (32).

6. The evacuation device of any of the preceding claims, comprising a connecting member (37), which is fixed to the float (36) at one end and rotatably connected to the first closing member (32) at the other end.

7. The evacuation device according to any of the preceding claims,
- wherein the housing (5) comprises a base (7) and a tubular main body (6),
- wherein the main body (6) forms at least part of the chamber (15) and the base (7) closes the main body (6) at its upper side,
- wherein the base is detachably connected to the main body in a non-destructive manner for maintenance purposes,
- and wherein the through opening (16) is formed in the base and the first closing member (32) is fixed to the base (7).

8. The suction device (1) for conveying a liquid, comprising a compressor (18), a suction pipe (3) and an evacuation device (2) according to any of the preceding claims, wherein the compressor (18) is connected to the evacuation connection (13) and wherein the chamber (15) is connected to the suction pipe (3) in a fluid-conveying manner.

## Revendications

1. Dispositif d'évacuation (2) pour une conduite d'aspiration (3), comprenant
- un boîtier (5) avec
- une chambre (15) pour le placement sur une conduite d'aspiration (3),
- un raccord d'évacuation (13) pour une conduite d'évacuation
- et une ouverture de passage (16) entre la chambre (15) et le raccord d'évacuation (13),
- une première soupape (30) avec
- un premier siège de soupape (31) au niveau de l'ouverture de passage (16),
- une première partie de fermeture (32) pour la fermeture du premier siège de soupape (31)
- et un flotteur (36) dans la chambre (15) qui est relié à la première partie de fermeture (32) de sorte que le flotteur (36) flottant ferme la première soupape (30),
- une seconde soupape (50), réalisée comme clapet antiretour, entre l'ouverture de passage (16) et le raccord d'évacuation (13), dans lequel la seconde soupape (50) s'ouvre pour un sens d'écoulement de la chambre (15) au raccord d'évacuation (13),
- dans lequel la seconde soupape (50) comporte un second siège de soupape (51) au niveau de l'ouverture de passage (16) et une seconde partie de fermeture (52) réalisée comme bille, pour la fermeture du second siège de soupape (51),
**caractérisé en ce que** la première partie de fermeture (32) présente un prolongement (42) qui dépasse dans l'état fermé de la première soupape (30) dans l'ouverture de passage (16) et presse la seconde partie de fermeture (52) hors du second siège de soupape (51).

2. Dispositif d'évacuation selon la revendication 1,
- dans lequel la première soupape (30) présente un moyen étanche (35),
- dans lequel la ligne d'eau (40) du flotteur (36) est espacée du moyen étanche (35) le long de l'axe vertical (60) d'une distance de flotteur (43),
- et dans lequel la distance de flotteur (43) s'élève à au moins 5 cm, de préférence à au moins 10 cm, de manière encore préférée à au moins 15 cm, de manière particulièrement préférée à au moins 20 cm.

3. Dispositif d'évacuation selon l'une quelconque des revendications précédentes, dans lequel la première partie de fermeture (32) est réalisée comme rabat.

4. Dispositif d'évacuation selon la revendication 3,
- dans lequel le rabat comporte un levier (33) et un couvercle (34),
- dans lequel le levier (33) est accroché de manière rotative côté boîtier,
- et dans lequel le couvercle (34) est réalisé pour la fermeture du premier siège de soupape (31) et est agencé de manière rotative au niveau du levier (33).

5. Dispositif d'évacuation selon l'une quelconque des revendications précédentes, dans lequel le flotteur (36) pend de la première partie de fermeture (32).

6. Dispositif d'évacuation selon l'une quelconque des revendications précédentes, comprenant un élément de liaison (37) qui est fixé à une extrémité au flotteur (36) et est relié à l'autre extrémité de manière rotative à la première partie de fermeture (32).

7. Dispositif d'évacuation selon l'une quelconque des revendications précédentes,
- dans lequel le boîtier (5) comporte une base (7) et un corps de base (6) tubulaire,
- dans lequel le corps de base (6) forme au moins une partie de la chambre (15) et la base (7) ferme le corps de base (6) au niveau de son côté supérieur,
- dans lequel la base est reliée à des fins de maintenance sans destruction de manière amovible au corps de base,
- et dans lequel l'ouverture de passage (16) est réalisée dans la base et la première partie de fermeture (32) est fixée à la base (7).

8. Dispositif d'aspiration (1) pour le refoulement d'un liquide, comprenant un compresseur (18), une conduite d'aspiration (3) et un dispositif d'évacuation (2) selon l'une quelconque des revendications précédentes, dans lequel le compresseur (18) est raccordé au raccord d'évacuation (13) et dans lequel la chambre (15) est reliée de manière à acheminer du fluide à la conduite d'aspiration (3).
